# EUROPEAN PATENT APPLICATION

(11) **EP 4 685 901 A1**
(43) Date of publication of application: **28.01.2026**
(21) Application number: 25189905.0
(22) Date of filing: 16.07.2025
(51) Int. Cl.: H01M 10/0525, H01M 10/54

(54) **METHOD AND APPARATUS FOR DISASSEMBLING LAMINATED BATTERY**

(30) Priority: 26.07.2024 JP 2024121188
(71) Applicant: Prime Planet Energy & Solutions, Inc., Chuo-ku, Tokyo 103-0022 (JP)
(72) Inventor: UCHIDA, Yozo, Tokyo, 103-0022 (JP); KITAYAMA, Taku, Koriyama-shi, 963-0725 (JP)
(74) Representative: Kuhnen & Wacker Patent- und Rechtsanwaltsbüro PartG mbB

(57) **Abstract**

A method for disassembling a laminated battery (10) includes: preparing a laminated battery (10) including a laminate (20), an electrode body (30) enclosed in the laminate (20), and an electrolyte (40) enclosed in the laminate (20); and heating the laminated battery (10) until at least the laminate (20) is unsealed.

## Description

The present disclosure relates to a method and an apparatus for disassembling a laminated battery.

### BACKGROUND

Japanese Patent Application Publication No. 2020-194749, for example, discloses a method for disassembling a lithium ion battery cell in which a laminated electrode obtained by stacking positive electrodes plate and negative electrode plates with separators interposed therebetween is sealed with an outer package of a laminated film. In the method disclosed in Japanese Patent Application Publication No. 2020-194749, the lithium ion battery cell is cut open at an end of the laminated film, and then, the laminated film is separated from the laminated electrode.

### SUMMARY

In the method disclosed in Japanese Patent Application Publication No. 2020-194749, it is preferable that a cutting tool does not contact the laminated electrode in cutting the laminated film. However, in many laminated batteries, a gap between a laminate film and an electrode body is narrow, and it is not easy to cut the laminate film while preventing the cutting tool from contacting the electrode body. Here, a method for more easily disassembling a laminated battery will be proposed. An apparatus for more easily disassembling a laminated battery will also be proposed.

A method for disassembling a laminated battery proposed here includes: preparing a laminated battery including a laminate, an electrode body enclosed in the laminate, and an electrolyte enclosed in the laminate; and heating the laminated battery until at least the laminate is unsealed.

An apparatus for disassembling a laminated battery proposed here includes: a chamber housing a laminated battery including a laminate, an electrode body enclosed in the laminate, and an electrolyte enclosed in the laminate; and a heating device that heats the laminated battery in the chamber.

The method and apparatus for disassembling a laminated battery described above can more easily unseal the laminate by heating the laminated battery.

### BRIEF DESCRIPTION OF THE DRAWINGS

FIG. 1 is a schematic longitudinal cross-sectional view of a laminated battery according to one preferred embodiment.
FIG. 2 is a schematic view partially illustrating a disassembling apparatus.
FIG. 3 is a flowchart of disassembly of the laminated battery.
FIG. 4 is a schematic view illustrating a configuration of a disassembling apparatus according to another preferred embodiment.
FIG. 5 is a flowchart of another disassembly process of a laminated battery.

### DETAILED DESCRIPTION

One preferred embodiment of a disassembling apparatus for a laminated battery will be hereinafter described. The preferred embodiment described here is, of course, not intended to particularly limit the present disclosure. Each drawing is a schematic view and does not necessarily strictly reflect an actual product. Members and portions having the same functions are denoted by the same reference characters, and description for the same elements and features will not be repeated or will be simplified as appropriate.

### [Configuration of Laminated Battery]

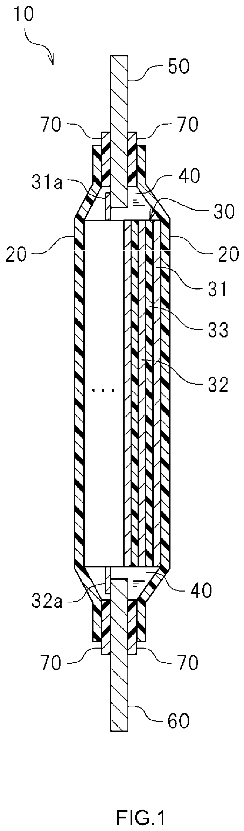

FIG. 1 is a schematic longitudinal cross-sectional view of a laminated battery 10 according to one preferred embodiment. As illustrated in FIG. 1, the laminated battery 10 includes a laminate outer package 20, an electrode body 30 enclosed in the laminate outer package 20, an electrolyte 40 enclosed in the laminate outer package 20, a positive electrode terminal 50, a negative electrode terminal 60, and tab films 70 that are sealing materials of the laminate outer package 20.

In this preferred embodiment, the electrode body 30 is a laminated electrode body in which a plurality of positive electrode sheets 31 and a plurality of negative electrode sheets 32 are stacked with separator sheets 33 interposed therebetween. The electrode body 30 may be a wound electrode body in which the positive electrode sheet 31 and the negative electrode sheet 32 stacked with the separator sheets 33 interposed therebetween are wound.

Each of the positive electrode sheets 31 is a member in which a positive electrode active material layer including a positive electrode active material is formed on each surface of a metal foil having a predetermined width and a predetermined thickness. The metal foil and the positive electrode active material are not particularly limited. Each positive electrode sheet 31 includes a positive electrode tab 31a connected to the positive electrode terminal 50.

Each of the negative electrode sheets 32 is a member in which a negative electrode active material layer including a negative electrode active material is formed on each surface of a metal foil having a predetermined width and a predetermined thickness. The metal foil and the negative electrode active material are not particularly limited. Each negative electrode sheet 32 includes a negative electrode tab 32a connected to the negative electrode terminal 60.

Each of the separator sheets 33 is, for example, a porous resin sheet which has a required heat resistance and through which an electrolyte can pass. The material for the separator sheets 33 is not particularly limited, either. The separator sheets 33 are sandwiched between the positive electrode sheets 31 and the negative electrode sheets 32, and insulate the positive electrode sheets 31 and the negative electrode sheets 32 from each other.

The laminate outer package 20 is made of an insulating laminated film. The laminate outer package 20 has a bag shape and houses the electrode body 30. Tn edge of the laminate outer package 20 sandwiches and seals the positive electrode terminal 50 and the negative electrode terminal 60 connected to the electrode body 30. Each of the positive electrode terminal 50 and the negative electrode terminal 60 extends to the outside of the laminate outer package 20.

The tab films 70 are made of a thermoplastic resin. The tab films 70 are an example of a thermoplastic sealing material that seals the laminate outer package 20. The tab films 70 are located between an edge of the laminate outer package 20 on the positive-electrode side and the positive electrode terminal 50, and between an edge of the laminate outer package 20 on the negative-electrode side and the negative electrode terminal 60. The tab films 70 are film-shaped thin sheets. The thermoplastic resin is preferably a polypropylene (PP), for example, in terms of adhesiveness. The tab film 70 on the positive-electrode side is welded to the edge of the laminate outer package 20 and the positive electrode terminal 50. The tab film 70 on the negative-electrode side is welded to the edge of the laminate outer package 20 and the negative electrode terminal 60. Accordingly, the tab films 70 seal gaps between the laminate outer package 20 and the positive and negative electrode terminals 50 and 60.

The electrolyte 40 is a solution in which an ionic substance is dissolved in a solvent, and mediates movement of electric charges between the positive electrode sheets 31 and the negative electrode sheets 32. As the electrolyte 40, in the case of a lithium ion secondary battery, for example, an organic solvent in which lithium salt is dissolved is used. The electrolyte 40 in this case is, for example, a nonaqueous electrolyte in which LiPF₆ is contained in a mixed solvent of ethylene carbonate (EC), dimethyl carbonate (DMC), and ethyl methyl carbonate (EMC). However, various materials are proposed for the electrolyte 40, and the electrolyte 40 is not particularly limited. The solvent of the electrolyte 40 is partially vaporized by heating. The vaporized electrolyte 40 returns to a liquid when cooled.

### [Configuration of Disassembling Apparatus]

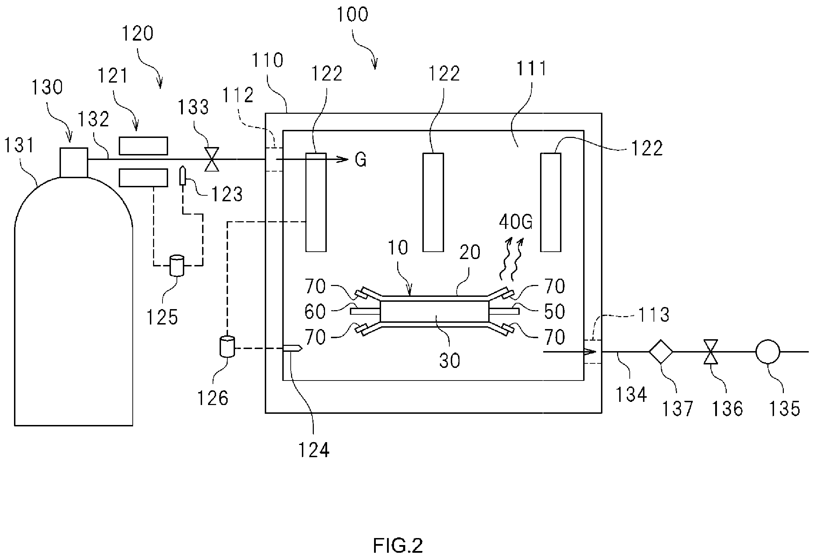

FIG. 2 is a schematic view illustrating a portion of a disassembling apparatus 100 for the laminated battery 10 (hereinafter also referred to simply as a disassembling apparatus 100). As illustrated in FIG. 2, the disassembling apparatus 100 includes a chamber 110 that houses the laminated battery 10, a heating device 120 that heats the laminated battery 10 in the chamber 110, and a replacing device 130 that replaces an atmosphere in the chamber 110 with an inert gas G. FIG. 2 shows only a configuration of the disassembling apparatus 100 that unseals the laminate outer package 20 of the laminated battery 10. The disassembling apparatus 100 may include another configuration such as a device for taking the electrode body 30 out of the laminate outer package 20, for example.

As illustrated in FIG. 2, the chamber 110 has a sealed box shape. The chamber 110 includes a door 111 that can be opened and closed. The laminated battery 10 is placed in the chamber 110 through the door 111. The chamber 110 includes an intake port 112 to which the inert gas G is supplied, and an exhaust port 113 from which a gas in the chamber 110 is exhausted.

The heating device 120 includes a preheater 121 that heats an inert gas G to be supplied to the chamber 110, and a panel heater 122 that heats and keeps heat of the inert gas G in the chamber 110. In this preferred embodiment, the heating device 120 heats the laminated battery 10 in the chamber 110 by heating the inert gas G. The inert gas G is, for example, nitrogen or argon. The type of the inert gas G is not particularly limited. The preheater 121 is located in an inlet pipe 132 that is connected to the intake port 112 and supplies the inert gas G. The panel heater 122 is located in the chamber 110.

The heating device 120 includes a first temperature sensor 123 that measures a temperature of the inert gas G in the inlet pipe 132, and a second temperature sensor 124 that measures a temperature of the inert gas G in the chamber 110. The heating device 120 further includes a first control device 125 that controls an output of the preheater 121 based on the temperature measured by the first temperature sensor 123, and a second control device 126 that controls an output of the panel heater 122 based on the temperature measured by the second temperature sensor 124.

The replacing device 130 replaces an atmosphere in the chamber 110 with the inert gas G by discharging air in the chamber 110 from the exhaust port 113 and supplying the inert gas G from the intake port 112 to the chamber 110. The replacing device 130 includes a gas cylinder 131 storing the inert gas G, an inlet pipe 132 connecting the gas cylinder 131 and the intake port 112 to each other, an intake valve 133 located in the inlet pipe 132, an outlet pipe 134 connected to the exhaust port 113, a discharge pump 135, a discharge valve 136, and a filter 137 located in the outlet pipe 134. The intake valve 133 opens when the inert gas G is introduced into the chamber 110, and otherwise, is closed. The discharge valve 136 opens when air or the inert gas G in the chamber 110 is discharged, and otherwise, is closed. The discharge pump 135 is driven when the air or the inert gas G in the chamber 110 is discharged. The electrolyte 40 vaporized when heated by the heating device 120 (hereinafter also referred to as a vaporized electrolyte 40G) is collected by the filter 137. The air and the inert gas G are discharged from the outlet pipe 134.

The configurations of the camber 110, the heating device 120, and the replacing device 130 described above are merely examples, and are not limited. The chamber 110, the heating device 120, and the replacing device 130 can suitably employ various known configurations.

### [Disassembly Process of Laminated Battery]

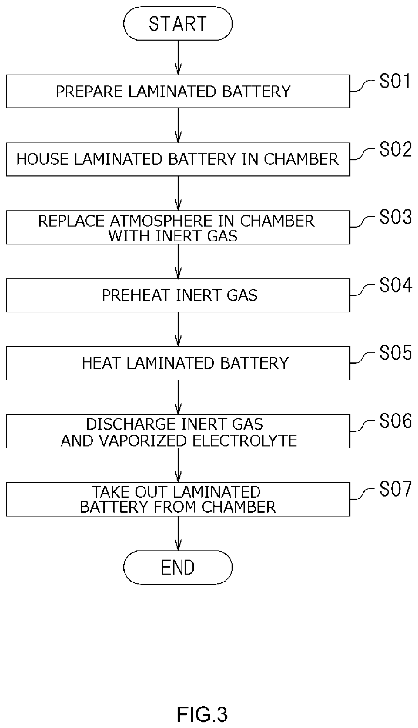

A process of disassembling the laminated battery 10 by the disassembling apparatus 100 will now be described. FIG. 3 is a flowchart of disassembly of the laminated battery 10. As shown in FIG. 3, in a preparation step S01 of the process of disassembling the laminated battery 10, the laminated battery 10 is prepared. The laminated battery 10 is typically a used battery. In disassembling the laminated battery 10, to efficiently collect and reuse resources such as a rare earth used in the electrode body 30, the electrode body 30 is separated from the laminate outer package 20 and other members.

In a housing step S02, the laminated battery 10 is housed in the sealed chamber 110. Specifically, the door 111 of the disassembling apparatus 100 is opened, the laminated battery 10 is placed in the chamber 110, and the door 111 is closed. Although FIG. 2 shows one laminated battery 10, a plurality of laminated batteries 10 may be housed in the chamber 110 and processed at the same time.

In a subsequent replacing step S03, an atmosphere in the chamber 110 is replaced with an inert gas G. In the replacing step S03, the discharge pump 135 is driven to discharge air in the chamber 110. After a lapse of a predetermined time in which it is estimated that some amount of air in the chamber 110 is discharge, the inert gas G is supplied into the chamber 110, and discharge is stopped. In this preferred embodiment, in a preheating step S04 of heating the inert gas G in the inlet pipe 132 is performed simultaneously with the replacing step S03. Accordingly, the high-temperature inert gas G is introduced into the chamber 110 from the beginning. For convenience of illustration, FIG. 3 shows the preheating step S04 after the replacing step S03.

The temperature of the inert gas G to be introduced is herein greater than or equal to a melting point of the tab films 70 that are sealing materials of the laminate outer package 20. For example, in a case where the tab films 70 are made of PP, the melting point of the tab films 70 is about 160 degrees. The temperature of the inert gas G to be introduced is, for example, 160 degrees or more and 300 degrees or less. The laminate outer package 20 is unsealed by an internal pressure that rises because of vaporization of the electrolyte 40. In view of this, the temperature of the inert gas G to be introduced may be a temperature lower than the melting point of the tab films 70, for example, a temperature less than the melting point of the tab films 70 and greater than or equal to a softening temperature of the tab films 70. After a lapse of a predetermined time in which it is estimated that the chamber 110 is filled with the inert gas G, supply of the inert gas G is stopped.

In a heating step S05, the laminated battery 10 is heated until at least the laminate outer package 20 is unsealed. In this preferred embodiment, heating of the laminated battery 10 is started by supplying the heated inert gas G into the chamber 110. The inert gas G in the chamber 110 is kept at a predetermined temperature (e.g., a temperature equal to the temperature of the inert gas G to be introduced) by the panel heater 122. In this manner, the laminated battery 10 is heated. When the laminated battery 10 is heated, the electrolyte 40 is partially vaporized, and the internal pressure of the laminate outer package 20 increases. In addition, the tab films 70 sealing the laminate outer package 20 are melted or softened by heat. Consequently, the laminate outer package 20 is unsealed.

In this preferred embodiment, after a lapse of a predetermined time in which it is confirmed in advance that the laminate outer package 20 is reliably unsealed, the heating step S05 is finished. The expression "heating the laminated battery 10 until at least the laminate outer package 20 is unsealed" includes heating by such time management. The unsealing of the laminate outer package 20 may be monitored by, for example, a camera or the like.

In a discharging step S06, the discharge pump 135 is driven to discharge the inert gas G and the vaporized electrolyte 40G from the chamber 110. In a take-out step S07, the unsealed laminated battery 10 is taken out from the chamber 110. Thereafter, the electrode body 30 is taken out from the edge of the unsealed laminate outer package 20, and a rare earth and other substances are further collected from the electrode body 30. Description of these processes will be omitted.

### [Advantages of Preferred Embodiment]

The following description is directed to advantages obtained by the method for disassembling the laminated battery 10 according to this preferred embodiment.

The method for disassembling the laminated battery 10 according this preferred embodiment includes: the preparation step S01 of preparing the laminated battery 10 including the laminate outer package 20, the electrode body 30 enclosed in the laminate outer package 20, and the electrolyte 40 enclosed in the laminate outer package 20; and the heating step S05 of heating the laminated battery 10 until at least the laminate outer package 20 is unsealed. With this method, the laminate outer package 20 can be unsealed by the easy step of heating the laminated battery 10. Thus, the laminated battery 10 can be more easily disassembled. As described above, in the conventional method for disassembling a laminated battery, it is not easy to prevent the cutting tool from contacting the electrode body in cutting the laminate outer package. On the other hand, if the laminate outer package is cut while allowing the cutting tool to contact the electrode body, a short circuit might occur in the electrode body via the cutting tool. With the method according to this preferred embodiment, since no cutting tool is used, a short circuit is less likely to occur in the electrode body 30.

The disassembling method according to this preferred embodiment further includes: the housing step S02 of housing the laminated battery 10 in the sealed chamber 110 before the heating step S05; and the replacing step S03 of replacing an atmosphere in the chamber 110 with an inert gas G after the housing step S02 and before the heating step S05. If the electrolyte 40 in the high-temperature state is present in the air, when a short circuit occurs in the electrode body 30, for example, the electrolyte 40 might be burned (react with oxygen in the air). On the other hand, with the method of replacing the atmosphere in the chamber 110 with the inert gas G, since the atmosphere in the chamber 110 is an atmosphere of the inert gas G, the electrolyte 40 is not burned.

In this preferred embodiment, the laminate outer package 20 is sealed by thermoplastic sealing material (tab films 70). In the heating step S05, the laminated battery 10 is heated to a temperature greater than or equal to the melting point of the tab films 70. With this method, the tab films 70 are melted in the heating step S05. Thus, the laminate outer package 20 can be reliably unsealed.

### [Other Preferred Embodiments]

One preferred embodiment of a method for disassembling a laminated battery disclosed here has been described above. The preferred embodiment described above, however, is merely an example, and the present disclosure can be carried out in other modes.

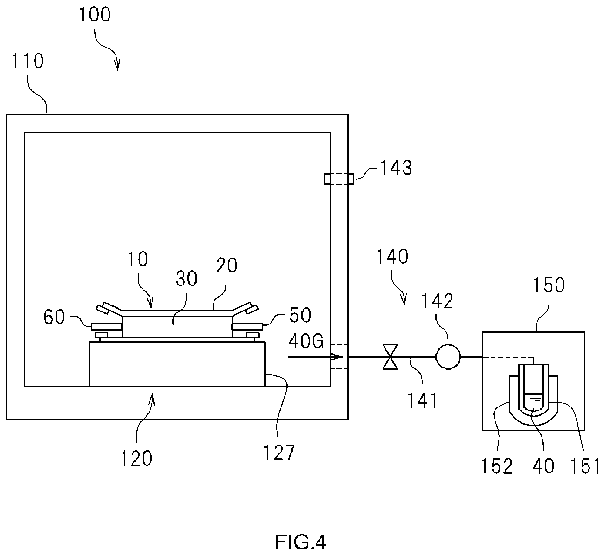

FIG. 4 is a schematic view illustrating a configuration of a disassembling apparatus 100 according to another preferred embodiment. In the following description of the other preferred embodiment, members having the same functions as those of the preferred embodiment described above are denoted by the same reference numerals. As illustrated in FIG. 4, the disassembling apparatus 100 according to the other embodiment includes a chamber 110, a heating device 120, a pressure-reducing device 140 that discharges air in the chamber 110, and a collecting device 150 that collects and liquefies a vaporized electrolyte 40G. The disassembling apparatus 100 illustrated in FIG. 4 heats a laminated battery 10 under a reduced pressure atmosphere, thereby preventing combustion of an electrolyte 40. The disassembling apparatus 100 collects the electrolyte 40 by the collecting device 150.

As illustrated in FIG. 4, the pressure-reducing device 140 includes a discharge pump 142 located in an outlet pipe 141, and a pressure gauge 143 that measures a pressure in the chamber 110. In this preferred embodiment, the heating device 120 includes a heating table 127 capable of heating an object even under a reduced pressure. The heating table 127 is configured to be heated to a high temperature itself, and the laminated battery 10 is heated when being placed on the heating table 127. A configuration of the heating device 120 for a reduced-pressure atmosphere is not particularly limited. The heating device 120 for a reduced-pressure atmosphere can employ a technique used for a vacuum furnace, for example, without any particular limitation.

The collecting device 150 collects and liquefies the vaporized electrolyte 40G vaporized by heating by the heating device 120 and diffused in the chamber 110. The collected electrolyte 40 is purified and reused. The collecting device 150 is connected to the outlet pipe 141. The collecting device 150 includes a collection container 151 and a cooling device 152. The vaporized electrolyte 40G discharged from the chamber 110 is introduced into the collection container 151. The cooling device 152 cools the collection container 151. The electrolyte 40 is liquefied by cooling to be accumulated in the collection container 151.

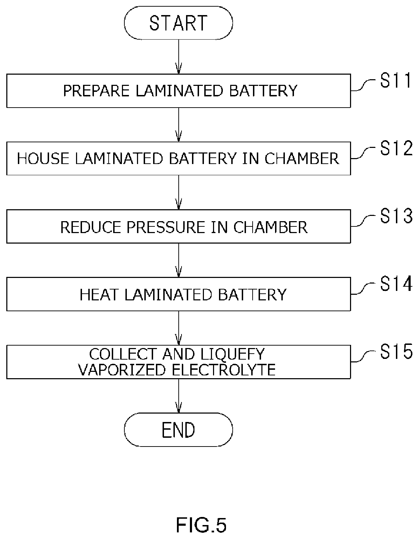

FIG. 5 is a flowchart according to another disassembly process of a laminated battery 10. As shown in FIG. 5, in this preferred embodiment, in a preparation step S11, a laminated battery 10 is prepared. In a housing step S12, the laminated battery 10 is housed in the sealed chamber 110. In a decompression step S13, air in the chamber 110 is discharged by the discharge pump 142 so that the pressure in the chamber 110 is thereby reduced. In a heating step S14, the laminated battery 10 is heated to be unsealed. The heating step S14 is performed after the pressure gauge 143 detects that the pressure in the chamber 110 has been reduced to a predetermined pressure or less. Preferably, in the heating step S14, the pressure reduction in the chamber 110 continues. It should be noted that during the heating step S14, the pressure reduction in the chamber 110 does not need to be performed.

In the heating step S14, the laminated battery 10 is heated until at least the laminate outer package 20 is unsealed. In this preferred embodiment, after a lapse of a predetermined time in which it is confirmed in advance that the laminate outer package 20 is reliably unsealed, the heating step S14 is finished. By performing the heating step S14 in a reduced-pressure atmosphere, combustion of the electrolyte 40 can be prevented.

A collecting step S15 is performed simultaneously with the heating step S14. In the collecting step S15, the vaporized electrolyte 40G vaporized in the heating step S14 and diffused in the chamber 110 is collected and liquefied. The collecting step S15 makes it possible to collect and reuse at least a part of the electrolyte 40.

The preferred embodiment described above does not limit to the present disclosure unless otherwise specified. For example, the heating step can be performed in the air or even in a place other than the sealed chamber. The technique disclosed here can be modified in various ways. Each component and each process mentioned here may be omitted as appropriate or combined as appropriate as long as no particular problems occur. The specification includes the disclosures described in the following items.

### Item 1:

A method for disassembling a laminated battery, the method comprising:
preparing a laminated battery including a laminate, an electrode body enclosed in the laminate, and an electrolyte enclosed in the laminate; and
heating the laminated battery until at least the laminate is unsealed.

### Item 2:

The method for disassembling a laminated battery according to Item 1, further comprising:
housing the laminated battery in a sealed chamber before the heating; and
replacing an atmosphere in the chamber with an inert gas, after the housing and before the heating.

### Item 3:

The method for disassembling a laminated battery according to Item 1, further comprising:
housing the laminated battery in a sealed chamber before the heating; and
discharging air in the chamber, after the housing and before the heating.

### Item 4:

The method for disassembling a laminated battery according to Item 3, further comprising:
collecting and liquefying a vaporized electrolyte vaporized by the heating and diffused in the chamber.

### Item 5:

The method for disassembling a laminated battery according to any one of Items 1 to 4, wherein
the laminate is sealed by a thermoplastic sealing material, and
in the heating, the laminated battery is heated to a temperature greater than or equal to a melting point of the sealing material.

### Item 6:

An apparatus for disassembling a laminated battery, the apparatus comprising:
a chamber housing a laminated battery including a laminate, an electrode body enclosed in the laminate, and an electrolyte enclosed in the laminate; and
a heating device that heats the laminated battery in the chamber.

### Item 7:

The apparatus for disassembling a laminated battery according to Item 6, further comprising
a replacing device that replaces an atmosphere in the chamber with an inert gas.

### Item 8:

The apparatus for disassembling a laminated battery according to Item 6, further comprising
a pressure-reducing device that discharges air in the chamber.

### Item 9:

The apparatus for disassembling a laminated battery according to Item 8, further comprising
a collecting device that collects and liquefies a vaporized electrolyte vaporized by heating of the heating device and diffused in the chamber.

### Item 10:

The apparatus for disassembling a laminated battery according to any one of Items 6 to 9, wherein
the laminate is sealed by a thermoplastic sealing material, and
the heating device heats the laminated battery to a temperature greater than or equal to a melting point of the sealing material.

## Claims

1. A method for disassembling a laminated battery (10), the method comprising:
preparing a laminated battery (10) including a laminate (20), an electrode body (30) enclosed in the laminate (20), and an electrolyte (40) enclosed in the laminate (20); and
heating the laminated battery (10) until at least the laminate (20) is unsealed.

2. The method for disassembling a laminated battery (10) according to claim 1, further comprising:
housing the laminated battery (10) in a sealed chamber (110) before the heating; and
replacing an atmosphere in the chamber (110) with an inert gas (G), after the housing and before the heating.

3. The method for disassembling a laminated battery (10) according to claim 1, further comprising:
housing the laminated battery (10) in a sealed chamber (110) before the heating; and
discharging air in the chamber (110), after the housing and before the heating.

4. The method for disassembling a laminated battery (10) according to claim 3, further comprising:
collecting and liquefying a vaporized electrolyte (40G) vaporized by the heating and diffused in the chamber (110).

5. The method for disassembling a laminated battery (10) according to any one of claims 1 to 4, wherein
the laminate (20) is sealed by a thermoplastic sealing material (70), and
in the heating, the laminated battery (10) is heated to a temperature greater than or equal to a melting point of the sealing material (70).

6. An apparatus (100) for disassembling a laminated battery (10), the apparatus (100) comprising:
a chamber (110) housing a laminated battery (10) including a laminate (20), an electrode body (30) enclosed in the laminate (20), and an electrolyte (40) enclosed in the laminate (20); and
a heating device (120) that heats the laminated battery (10) in the chamber (110).

7. The apparatus (100) for disassembling a laminated battery (10) according to claim 6, further comprising
a replacing device (130) that replaces an atmosphere in the chamber (110) with an inert gas (G).

8. The apparatus (100) for disassembling a laminated battery (10) according to claim 6, further comprising
a pressure-reducing device (140) that discharges air in the chamber (110).

9. The apparatus (100) for disassembling a laminated battery (10) according to claim 8, further comprising
a collecting device (150) that collects and liquefies a vaporized electrolyte (40G) vaporized by heating of the heating device (120) and diffused in the chamber (110).

10. The apparatus (100) for disassembling a laminated battery (10) according to any one of claims 6 to 9, wherein
the laminate (20) is sealed by a thermoplastic sealing material (70), and
the heating device (120) heats the laminated battery (10) to a temperature greater than or equal to a melting point of the sealing material (70).
